# EUROPÄISCHE PATENTSCHRIFT

(11) **EP 2 566 608 B1**
(45) Veröffentlichungstag und Bekanntmachung des Hinweises auf die Patenterteilung: **11.07.2018**
(21) Anmeldenummer: 11716953.2
(22) Anmeldetag: 04.05.2011
(51) Int. Cl.: C08J 3/05, C08J 3/09, B01F 3/08, B01F 3/22, B01F 7/00, B01F 15/04

(54) **VERFAHREN ZUR HERSTELLUNG FEINTEILIGER SUSPENSIONEN DURCH SCHMELZEMULGIEREN**
METHOD FOR PRODUCING FINE PARTICLE SUSPENSIONS BY MELT EMULSIFICATION
PROCÉDÉ DE PRÉPARATION DE SUSPENSIONS DE FINES PARTICULES PAR ÉMULSION D'UNE MATIÈRE FONDUE

(30) Priorität: 05.05.2010 EP 10161989
(43) Veröffentlichungstag der Anmeldung: 13.03.2013
(73) Patentinhaber: BASF SE, 67056 Ludwigshafen am Rhein (DE)
(72) Erfinder: ENGEL, Robert, 67346 Speyer (DE); DANNER, Thomas, 69469 Weinheim (DE); SACHWEH, Bernd, 67149 Meckenheim (DE); JUDAT, Sonja, 67098 Bad Dürkheim (DE); BAUDER, Andreas, 68199 Mannheim (DE); DENKOV, Nikolai, 1164 Sofia (BG); TCHOLAKOVA, Slavka, 1680 Sofia (BG)
(86) Internationale Anmeldenummer: PCT/EP2011/057086
(87) Internationale Veröffentlichungsnummer: WO 2011/138348

(56) Entgegenhaltungen:
- WO-A1-01/60506
- WO-A2-2009/138379
- WO-A2-2010/054197
- DE-A1- 10 126 653
- DE-A1- 19 829 647
- US-A1- 2001 021 372
- US-A1- 2007 030 322

## Beschreibung

Die vorliegende Erfindung betrifft ein Verfahren zur Herstellung feinteiliger Suspensionen durch Schmelzemulgieren eines Stoffs mit einer Schmelztemperatur oberhalb der Raumtemperatur. Ferner betrifft die Erfindung ein Verfahren zur Herstellung feinteiliger Suspensionen zur Herstellung von Dispersionen durch Schmelzemulgieren mit hohem Dispersphasenanteil.
Unter dem Begriff "Dispersion" wird ein Mehrphasensystem verstanden, welches mindestens zwei ineinander im Wesentlichen nicht-lösliche Komponenten umfasst. Dispersionen umfassen zum Einen Emulsionen, bei denen eine Flüssigkeit in Form von Tropfen in einer anderen Flüssigkeit verteilt vorliegt. Die Phase, die die Tropfen bildet, wird als disperse Phase oder innere Phase bezeichnet. Die Phase, in der die Tropfen verteilt sind, wird als kontinuierliche Phase oder äußere Phase bezeichnet.
Dispersionen umfassen zum Anderen Suspensionen, bei denen Feststoffpartikel in einer flüssigen kontinuierlichen Phase dispergiert sind. Außerdem gehören Stoffsysteme, die sowohl feste als auch flüssige Phasen in dispergierter Form aufweisen, ebenfalls zu Dispersionen. Beispielsweise könnte ein Feststoff in einer ersten Flüssigkeit verteilt vorliegen, wobei diese Suspension die disperse Phase einer Emulsion bildet. Man spricht in diesem Zusammenhang auch von Suspoemulsionen. Alternativ können in der kontinuierlichen Phase von Emulsionen auch Feststoffe verteilt sein.
Der Bedarf an feinteiligen Dispersionen hat in den vergangenen Jahren stark zugenommen. Beim Herstellen von Dispersionen ist es für den Erhalt eines Endprodukts mit den gewünschten Eigenschaften hinsichtlich der Größenverteilung der dispersen Phase, des Fließverhaltens und der Stabilität des Produkts gegenüber thermischer und mechanischer Belastung sowie zeitlichen Veränderungen gegenüber wichtig, dass die notwendigen Schritte des Einbringens der inneren Phase in die äußere Phase zum Herstellen eines Pre-Mixes, das Feindispergieren und das Stabilisieren des erhaltenen Produktes prozesstechnisch definiert und zuverlässig durchgeführt werden. Es entsteht zuerst eine grobe Emulsion mit geringer Viskosität als Voremulsion, auch Pre-Mix genannt. Durch weiteren Eintrag von mechanischer Energie wird die Emulsion feiner und die Viskosität steigt an. Industriell werden Dispersionen, insbesondere Emulsionen, durch verschiedene Prozesse hergestellt. Welcher Prozess ausgewählt wird, hängt von der Art der Dispersion ab sowie von der Feinheit der dispersen Phase, mit welcher eine über einen geforderten Zeitraum stabile Dispersion erhalten werden kann. Unter einer stabilen Dispersion wird ein Stoffsystem verstanden, dessen Partikelgrößenverteilung und räumliche Verteilung der dispersen Phase und/oder dessen Fließverhalten, insbesondere dessen Viskosität, sich über einen vorgegebenen Zeitraum im Wesentlichen nicht durch beispielsweise Sedimentation ändert.

Zum industriellen Herstellen von Dispersionen werden für relativ grobe Dispersionen häufig Behälter mit einem Rührwerk beispielsweise einem Schaberrührwerk oder einer Rührwerksturbine eingesetzt. Für feinere Dispersionen werden zweistufige Prozesse verwendet, in welchem zunächst in einem Behälter mit Rührwerk eine Voremulsion hergestellt wird und anschließend ein Durchlauf durch eine Rotor-Stator-Maschine erfolgt. Diese kann beispielsweise eine Kolloidmühle sein. Besonders feine Dispersionen lassen sich erzielen, indem als zusätzlicher Prozessschritt das Dispergieren in einem Hochdruck-Homogenisator durchgeführt wird.

Ein weiteres Verfahren zur Herstellung von Dispersionen stellt das Schmelzemulgieren dar. Bei dem Verfahren des Schmelzemulgierens wird der Feststoff zur Herstellung einer feinteiligen Suspension oder Emulsion, die dann beispielsweise wieder zu einer stabilen Dispersion verarbeitet werden kann, geschmolzen und als Schmelze emulgiert. Prozesszeiten und Energieaufwand sind hierbei zwar bereits gegenüber anderen Verfahren reduziert, jedoch keinesfalls optimal. Ferner müssen Emulgatoren und Schutzkolloid-Systeme gefunden werden, die über einen weiten Temperaturbereich stabil und wirksam sein müssen. Diese Hilfsstoffe können bis heute nur durch aufwendige Try-and-Error-Verfahren gefunden werden und sind ein entscheidender Kostenfaktor in der Produktentwicklung und Produktion. Um sehr feinteilige Suspensionen herstellen zu können, sind bislang sehr hohe Temperaturen für den Schmelzemulsionsvorgang notwendig. Die dafür nötige hohe Temperatur schadet dabei nicht selten den Inhaltsstoffen. Darüber hinaus stellt der erhöhte Energiebedarf einen zusätzlichen negativen wirtschaftlichen Effekt dar. Der sich nach dem Schmelzemulgieren bei sehr hoher Temperatur anschließende Abkühlungsvorgang zieht einen deutlich höheren apparativen Aufwand nach sich und die Prozesszeit in die Länge. Der Aufwand ist umso größer und die Prozesszeit umso länger, wenn das Verfahren bei sehr hohen Temperaturen abläuft.

In US-A 2005/0031659 werden Öl-in-Wasser-Emulsionen, hergestellt durch Schmelzemulgieren, offenbart, die eine konzentrierte Ölphase und ein wasserlösliches Emulsionsbildungspolymer enthalten. Die disperse Ölphase beträgt mindestens 50 Gew.-% und bis zu 93 Gew.-%. Es werden bevorzugt Öle und Wachse verwendet, die eine Schmelztemperatur von unter 100 °C besitzen. Die kontinuierliche Phase umfasst auch wasserlösliche Komponenten wie Glycerin und Propylenglykol. Als Geräte für die Herstellung der Öl-in-Wasser-Emulsionen werden Küchenhilfen oder Ultra Power Mixer verwendet.

In DE-A 10 2004 055 542 wird ein Verfahren zur Herstellung einer feinteiligen Emulsion aus einer Rohemulsion offenbart. Die Rohemulsion wird durch eine poröse Membran gedrückt, die aus zwei oder mehreren übereinander liegenden Schichten aufgebaut ist. Bevorzugt werden Ultrafiltrations- und Mikrofiltrationsmembranen eingesetzt. Das Verfahren wird bevorzugt bei scher- und temperaturempfindlichen Stoffen eingesetzt.
In US 4,254,104 wird die Herstellung einer Öl-in-Wasser-Emulsion mit einem Ölgehalt von bis zu 90 % Öl beschrieben, die nach Herstellung auf den gewünschten Dispersphasenanteil verdünnt wird. Die Stabilisierung der Öl-in-Wasser-Emulsion wird mit nicht ionischen Emulgatoren erreicht. Die Tröpfchengrößenverteilung liegt bei unter 1 µm. Die Emulgierung wird mit Hilfe von Homomixern und Rührern erzielt.

In US 5,670,087 wird die Herstellung einer Öl-in-Wasser-Emulsion durch Schmelzemulgieren mit Bitumen als Dispersphase bei einer Herstelltemperatur mit bis zu 100 °C und niedriger Scherung von 10 bis 1000 s⁻¹ beschrieben. Es wird offenbart, dass die Emulgierung bei niedrigerer Temperatur als üblich stattfindet und somit sogar Hartbitumen, also Bitumen (Erdpech), das sich durch einen hohen Erweichungspunkt in Verbindung mit einer geringen Tendenz zur Verformbarkeit auszeichnet, hergestellt werden kann, das mit herkömmlichen Verfahren nicht hergestellt werden kann. Die Tröpfchengrößenverteilung liegt zwischen 2 und 50 µm. Nach der Herstellung der Emulsion wird gegebenenfalls mit Wasser verdünnt.

In US 4,788,001 wird die Herstellung einer Öl-in-Wasser-Emulsion aus hochviskosen Ölen, insbesondere Silikonölen ohne Anwendung von Wärme zur Senkung der Viskosität bei einem Dispersphasenanteil von maximal 90 % beschrieben. Das Emulgieren erfolgt mit Hilfe von Rührmixgeräten, wodurch mittlere Tröpfchengrößenverteilungen zwischen 0,5 und 1 µm erzielt werden.
Die DE 101 26 653 A1 zeigt ein Verfahren zur Herstellung von pigmentierten Pulverlacksuspensionen durch Emulgierung. Das Verfahren geht aus von der Herstellung mindestens zweier flüssiger Komponenten, die mindestens ein flüssiges Ausgangsprodukt der Pulverlacksuspensionen enthalten, wobei die Ausgangsprodukte bei Raumtemperatur fest sein können und bei den angewandten Prozesstemperaturen flüssig sind. Bei der Verflüssigung oder dem Schmelzvorgang werden die Prozesstemperaturen so gewählt, dass die Zersetzungstemperatur des Ausgangsprodukts nicht überschritten wird. Die Komponenten werden in einem statischen Mischer vermischt und anschließend in einem wässrigen Medium emulgiert. Die Emulsion wird daraufhin abgekühlt, wobei sich eine Suspension dimensionsstabiler Partikel bildet.

Die WO 2009/138379 A2 zeigt ein Verfahren zur Herstellung einer Dispersion, wobei zunächst eine Mischung, die wenigstens einen schmelzbaren Feststoff, wenigstens ein flüssiges Polymer und wenigstens ein Copolymer und/oder einen Emulgator enthält, erwärmt wird, die Mischung dann dispergiert wird und schließlich abgekühlt wird.

Nachteilig an den Verfahren aus dem Stand der Technik ist, dass es bislang kein ökonomisches Verfahren gibt, das es erlaubt, einen bei Raumtemperatur festen Stoff energie- und komponentenschonend bei einer Temperatur, die höchstens 10 K über der Schmelztemperatur des bei Raumtemperatur festen Stoffes liegt, über eine feinteilige Emulsion in eine feinteilige Suspension zu überführen, die neben Wasser auch andere Flüssigkeiten als kontinuierliche Phase aufweisen kann.

Die Aufgabe der vorliegenden Erfindung liegt darin, ein Verfahren bereitzustellen, das es ermöglicht, aus einem Stoff mit einer Schmelztemperatur oberhalb der Raumtemperatur eine feinteilige Suspension herzustellen, wobei die Inhaltsstoffe während des Verfahrens geschont werden und Koaleszenz oder Aggregation vermieden oder reduziert wird.

Die Aufgabe wird gelöst durch die Bereitstellung eines Verfahrens zur Herstellung einer feinteiligen Suspension durch Schmelzemulgieren, enthaltend mindestens einen Stoff mit einer Schmelztemperatur oberhalb der Raumtemperatur, umfassend folgende Schritte:
(a) Überleitung mindestens einer Voremulsion, enthaltend eine kontinuierliche und eine disperse Phase in eine Rotor-Stator-Maschine, eine Rotor-Rotor-Maschine oder zu einer kontinuierlichen und/oder dispersen Phase, wobei die Voremulsion den mindestens einen Stoff mit einer Schmelztemperatur oberhalb der Raumtemperatur enthält;
(b) Emulgieren der mindestens einen Voremulsion unter mechanischer Scherung und/oder Dehnung und/oder Turbulenz bei einer Temperatur die maximal 10 K über der Schmelztemperatur des mindestens einen Stoffs mit der Schmelztemperatur oberhalb der Raumtemperatur liegt, beziehungsweise bei einer Temperatur die maximal 10 K unter und maximal 10 K über der Glasübergangstemperatur oder der Schmelztemperatur liegt, sofern der Stoff mit einer Schmelztemperatur oberhalb der Raumtemperatur ein Polymer ist, zur Herstellung einer feinteiligen Emulsion;
(c) Abkühlen der feinteiligen Emulsion zur Herstellung einer feinteiligen Suspension;
wobei der Dispersphasenanteil mindestens in Schritt (b) im Bereich von 85 % bis 99,5 % liegt und der Dispersphasenanteil der in Schritt (b) erhaltenen feinteiligen Emulsion im Bereich von 85 % bis 99,5 % liegt.

In einem optionalen weiteren Verfahrensschritt können gegebenenfalls eine oder mehrere weiterer Komponenten zu der mindestens einen Voremulsion in der Rotor-Stator-Maschine hinzugefügt werden.

Unter der Schmelztemperatur eines bei Raumtemperatur festen Stoffes wird die Temperatur verstanden bei der ein Stoff, der bei Raumtemperatur fest ist, durch Temperatureintrag vom festen in den flüssigen Aggregatzustand übergeht.

Die Glasübergangstemperatur (T_{G}) ist die Temperatur, bei der beispielsweise ein Polymer die größte Änderung der Verformungsfähigkeit aufweist. Der Glasübergang trennt den unterhalb liegenden spröden energieelastischen Bereich (=Glasbereich) vom oberhalb liegenden weichen entropieelastischen Bereich (=gummielastischer Bereich).

Die Vorteile des erfindungsgemäßen Verfahrens liegen darin, dass die Inhaltsstoffe durch die aufgrund des hohen Dispersphasenanteils nur notwendige, maximal 10 K über dem Schmelzpunkt des bei Raumtemperatur festen Stoffes liegende Temperatur während des Schmelzemulsionsvorgangs geschont werden und gleichzeitig durch diese niedrige Temperatur Energie eingespart wird.

Vorteilhaft ist auch, dass durch die verhältnismäßig niedrige, maximal 10 K über dem Schmelzpunkt des bei Raumtemperatur festen Stoffes liegende Temperatur, die für den erfindungsgemäßen Schmelzemulsionsvorgang nötig ist, ein schnelleres Abkühlen auf einem Bereich, in dem die Suspension stabil gegen Koaleszenz und/oder Aggregation ist, möglich ist. Darüber hinaus eröffnet ein solches Schmelzemulsionsverfahren bei niedriger Temperatur auch bessere Auswahlmöglichkeiten hinsichtlich verwendbarer Emulgatoren.

Die mindestens eine Vordispersion aus Schritt (a) kann durch Vordispergieren mindestens eines bei Raumtemperatur festen Stoffes und gegebenenfalls Hilfsstoffen in einer kontinuierlichen Phase in einem Rührkessel und anschließendem Aufheizen der mindestens einen Vordispersion auf eine Temperatur, die maximal 10 K über der Schmelztemperatur des mindestens einen Stoffs mit einer Schmelztemperatur oberhalb der Raumtemperatur liegt, beziehungsweise mit Hilfe eines statischen Mischers unter kontinuierlicher Zufuhr der dispersen Phase hergestellt werden.

Die mindestens eine Voremulsion aus Schritt (a) kann auch durch direkte Zufuhr eines gemahlenen oder durch Temperatureintrag geschmolzenen Feststoffs zu einer kontinuierlichen Phase bereitgestellt werden. Die kontinuierliche Phase kann dabei Raumtemperatur oder eine Temperatur aufweisen, die bei Mischung mit dem Feststoff bis zu 10 K über dem Schmelzpunkt des mindestens einen bei Raumtemperatur festen Stoffes liegt. Die kontinuierliche Phase allein kann dabei eine wesentlich höhere Temperatur aufweisen. So kann beispielsweise Polyethylen als disperse Phase geschmolzen und über ein Zuleitungsstück zu beispielsweise Wasser als kontinuierlicher Phase gegeben werden. Die so erzeugte Voremulsion kann dann gemäß Verfahrensschritt (a) über ein Zuleitungselement in eine Rotor-Stator-Maschine überführt werden.

Die verwendete kontinuierliche Phase kann hydrophil und bei Raumtemperatur flüssig sein.

Allerdings können als kontinuierliche Phase auch Flüssigkeiten eingesetzt werden, die beispielsweise lipophilen Charakter aufweisen. Beispielsweise können auch fluorierte oder perfluorierte Flüssigkeiten und Lösungsmittel Anwendung finden. Wichtig ist lediglich, dass die Phasen auch bei hohen Temperaturen nicht ineinander mischbar sind.

Unter einer Rotor-Stator-Maschine versteht man allgemein einen Homogenisierapparat, der speziell bei der Herstellung von Emulsionen zum Einsatz kommt.

Homogenisierapparate werden zum mechanischen Vermischen und Verrühren mehrerer miteinander nicht kompatibler Flüssigkeiten, beispielsweise Wasser und Öl, benutzt, um diese Flüssigkeiten zu einer Emulsion zu homogenisieren. Häufige Anwendung finden sie in Produktionseinrichtungen für Nahrungsmittel, chemische Erzeugnisse oder dergleichen, Versuchseinrichtungen usw. Nach dem Stand der Technik sind Homogenisierapparate in den verschiedensten Ausführungen bekannt, darunter auch Rotor-Stator-Maschinen.

Rotor-Stator-Maschinen sind für Dispergierzwecke deutlich wirksamer als beispielsweise Scheiben-, Impeller- oder Propeller-Rührer. In einer Rotor-Stator-Maschine ist der durchbrochene Rotor eng von einem durchbrochenen Stator umgeben; zwischen dem Rotor und dem Stator wird ein extrem hohes Scherfeld aufgebaut. Darüber hinaus sind pro Rotor-Stator-Einheit mehrere konzentrische Ringe möglich.

Das Funktionsprinzip des Rotor-Stators sieht im Wesentlichen vor, den zu homogenisierenden Stoff axial in einen Dispergierkopf anzusaugen, dort um 90° umzulenken und durch die Schlitze des Rotors zu fördern. Der Rotor rotiert hierbei mit sehr hohen Drehzahlen. Der feststehende Stator hat ebenfalls Schlitze, durch die der zu homogenisierende Stoff zum Ausgang der Rotor-Stator-Maschine gelangt.

Im Detail weist eine Rotor-Stator-Maschine einen in einer Rührkammer fixierten zylindrischen Stator und einen in einem Statorhohlraum angeordneten Rotor auf, dem durch einen Motor eine Drehzahl vorgegeben wird, wobei Stator und Rotor mit mehreren radial ausgebildeten Strömungskanälen versehen sind. Beispielsweise werden zwei miteinander nicht kompatible Flüssigkeiten durch eine von der Rotor-Stator-Maschine getrennt angeordnete Pumpe in den Hohlraum geleitet. Beginnt der Rotor nach Zuleitung der Flüssigkeiten zu rotieren, so wird den Flüssigkeiten eine Fliehkraft beaufschlagt, wobei die Flüssigkeiten aus den im Rotor ausgebildeten Strömungskanälen ausgestoßen, in den Spalt zwischen Rotor und Stator ausgetragen sowie schließlich in die radialen Strömungskanäle des Stators eingebracht werden. Für eine wirksame Homogenisierung von zwei oder mehr Flüssigkeiten in einer Rotor-Stator-Maschine ist es also wichtig, dass den in den Spalt zwischen Rotor und Stator eingetretenen Flüssigkeiten eine hohe Scherkraft beaufschlagt wird. Der Stator rotiert nicht, sondern bleibt stillstehend, so dass bei Beginn der Rotordrehung in den in den radialen Strömungskanälen von Rotor und Stator befindlichen Flüssigkeiten eine Wirbelströmung erzeugt wird. Weiter wird entsprechend der Rotordrehzahl den in den Spalt zwischen Rotor und Stator eingetretenen Flüssigkeiten eine Scherkraft beaufschlagt. Durch die Energie der Wirbelströmung und der Scherkraft werden die beiden Flüssigkeiten homogenisiert und schließlich über die im Stator ausgebildeten radialen Strömungskanäle als Emulsion nach außen geleitet.

Bekannt sind als Rotor-Stator-Maschinen beispielsweise Zahnkranzdispergiermaschinen mit Rührwerken. Ferner gibt es Kolloidmühlen oder Hochdruckhomogenisatoren.

Im Unterschied zu einer Rotor-Stator-Maschine ist bei einer Rotor-Rotor-Maschine an Stelle des Stators ein mit einer zweiten von der Geschwindigkeit des ersten Rotors unterschiedlichen Geschwindigkeit rotierender Rotor enthalten. Im Übrigen entsprechen sich Rotor-Startor-Maschine und Rotor-Rotor-Maschine im Aufbau.

Im Folgenden werden die einzelnen Verfahrensschritte im Detail beschrieben:
In Verfahrensschritt (a) wird mindestens eine zuvor hergestellte Voremulsion, enthaltend jeweils eine kontinuierliche und eine disperse Phase, vorzugsweise aus einem Behälter in eine Rotor-Stator-Maschine oder eine Rotor-Rotor-Maschine übergeleitet. Diese Überleitung kann über ein oder mehrere Zuleitungselemente, wie Zuleitungsstücke bzw. Zuleitungsrohre oder Zuleitungsschläuche erfolgen. Gegebenenfalls wird die Zuleitung durch Pumpen, Über- oder Unterdruck unterstützt. Die mindestens eine zuvor hergestellte Voremulsion enthaltend jeweils eine kontinuierliche und eine disperse Phase, kann allerdings auch zu einer anderen kontinuierlichen Phase oder dispersen Phase oder einer Mischung hieraus übergeleitet werden. Ferner kann die mindestens eine zuvor hergestellte Voremulsion unterschiedlich vortemperiert sein.

Sofern mehr als eine Voremulsion verwendet wird, können diese zuvor miteinander in einem Behälter vermischt werden und als Voremulsionsmischung über eine einzige Zuleitung in die Rotor-Stator-Maschine übergeleitet werden.

Es ist jedoch auch möglich, dass jede der verschiedenen Voremulsionen separat über ein eigenes Zuleitungselement in die Rotor-Stator-Maschine übergeleitet wird. Die Zuleitung kann jeweils simultan oder je nach Voremulsionsmischung hintereinander geschaltet erfolgen.

Generell kann die Überleitung der mindestens einen Voremulsion durch kontinuierliche Zuführung über ein Zuleitungselement in die Rotor-Stator-Maschine erfolgen, oder die Überleitung der mindestens einen Voremulsion erfolgt durch diskontinuierliche, phasenweise Zuführung über ein Zuleitungselement in die Rotor-Stator-Maschine.

In dem optionalen weiteren Verfahrensschritt können der mindestens einen zuvor in die Rotor-Stator-Maschine übergeleiteten Voremulsion weitere Komponenten zugefügt werden. Diese weiteren Komponenten können ausgewählt sein aus der Gruppe bestehend aus Hilfsstoffen, wie Emulgatoren, Dispergierhilfsmittel, Schutzkolloide und Rheologieadditive sowie weiteren dispersen Phasen.

Diese weiteren Komponenten können gelöst oder als Feststoff der Rotor-Stator-Maschine mit der sich darin befindlichen mindestens einen Voremulsion hinzugefügt werden. Die Zuleitung erfolgt vorzugsweise über ein beliebiges, dem Fachmann bekanntes Zuleitungselement.

In Verfahrensschritt (b) erfolgt die Herstellung der feinteiligen Emulsion in der Rotor-Stator-Maschine durch Emulgieren der mindestens einen Voremulsion unter mechanischer Scherung und/oder Dehnung und/oder Turbulenz bei einer Temperatur die mindestens 10 K unter und maximal 10 K über der Schmelztemperatur des mindestens einen Stoffs mit der Schmelztemperatur oberhalb der Raumtemperatur liegt, beziehungsweise bei einer Temperatur die mindestens 10 K unter und maximal 10 K über der Glasübergangstemperatur oder der Schmelztemperatur des bei Raumtemperatur festen Stoffes liegt, sofern der Stoff mit einer Schmelztemperatur oberhalb der Raumtemperatur ein Polymer ist.

Bevorzugt liegt die Temperatur während des Emulgierens maximal 2 K oberhalb der Schmelztemperatur des bei Raumtemperatur festen Stoffes.

Besonders bevorzugt liegt die Temperatur während des Emulgierens in Höhe des Schmelzpunktes des bei Raumtemperatur festen Stoffes.

Das Emulgieren kann bei verschiedenen Scherraten von 10³ bis 10⁷ s⁻¹ erfolgen. Bevorzugt erfolgt das Emulgieren bei einer Scherrate von 2,5 x10⁴ bis 2,5 x 10⁵ s⁻¹.

Als Rotor-Stator-Maschinen können Rotor-Stator-Maschinen des Typs Zahnkranzdispergiermaschine, Kolloidmühle oder Zahnscheibenmühle verwendet werden.

Die feinteilige Emulsion, die am Ende des Prozessschrittes (b) erhalten wird, hat vorzugsweise einen Dispersphasenanteil von 85 % bis 99,5 %.

Die durch Verfahrensschritt (b) erhaltene feinteilige Emulsion kann auch direkt ausgeleitet werden und unmittelbar in einem weiteren Verfahren verwendet werden.

In Verfahrensschritt (c) wird die zuvor hergestellte, feinteilige Emulsion durch Zugabe einer weiteren, auf unterhalb der Schmelz- oder Glasübergangstemperatur des bei Raumtemperatur festen Stoffs temperierten, kontinuierlichen Phase abgekühlt.

In einer bevorzugten Ausführungsform wird die zuvor hergestellte, feinteilige Emulsion durch Zugabe einer weiteren, auf unterhalb der Schmelz- oder Glasübergangstemperatur des bei Raumtemperatur festen Stoffs temperierten, kontinuierlichen Phase verdünnt.

In einer besonders bevorzugten Ausführungsform findet das Abkühlen in Verfahrensschritt (c) gleichzeitig mit dem Verdünnen statt.

Hierdurch wird dann die feinteilige Emulsion in eine feinteilige Suspension überführt. Das Abkühlen mit der vorzugsweise gleichzeitigen Verdünnung der feinteiligen Emulsion kann über die Zufuhr einer kälteren Phase über eine oder mehrere Zuleitungselemente kontinuierlich oder diskontinuierlich erfolgen. Bevorzugt erfolgt das Abkühlen und die vorzugsweise gleichzeitige Verdünnung kontinuierlich.

Bevorzugt liegt die Temperatur der weiteren kontinuierlichen Phase unterhalb der Schmelztemperatur der dispersen Phase, aber so hoch, dass die sich beim Abkühlen und Verdünnen ergebende kontinuierliche Phase nicht erstarrt.

Die Verdünnung kann auf einen Dispersphasenanteil zwischen 1 und 85 % erfolgen. In einer bevorzugten Ausführungsform des erfindungsgemäßen Verfahrens erfolgt das Abkühlen mit vorzugsweise gleichzeitigem Verdünnen in Schritt (c) auf eine Endkonzentration an Dispersphasenanteil von 1 bis 70 Gew.-%, bevorzugt 20 bis 70 Gew.-%.

Ein weiterer Vorteil ist, dass die feinteilige Emulsion in Verfahrensschritt (c) zwar im Zuge des Abkühlens beliebig verdünnt werden kann, aber nicht zwingend verdünnt werden muss. Hierdurch ist es möglich, feinteilige Suspensionen mit ganz verschiedenen Eigenschaften zu erzeugen, wodurch das Verfahren sehr breit und flexibel anwendbar ist. Die Abkühlung kann ebenso durch externe Kühlelemente oder durch Hinzugabe einer kontinuierlichen Phase mit identischem Dispersphasenanteil erfolgen.

Das Abkühlen und/oder Verdünnen kann in der Rotor-Stator- bzw. Rotor-Rotor-Maschine aber auch nach der Ausleitung in einem zusätzlichen Apparat erfolgen. Das Abkühlen und Verdünnen kann nacheinander oder gleichzeitig erfolgen. Bevorzugt erfolgt das Abkühlen und Verdünnen gleichzeitig. Durch das Verdünnen reduziert sich die Koaleszenz und Aggregatbildung; ferner kommt es zu einer schnelleren Abkühlung und einer besseren Fließfähigkeit bei Raumtemperatur.

An das Verfahren schließt sich üblicherweise ein Ausleitungsschritt an. Dieser Ausleitungsschritt kann über gängige Ausleitungsvorrichtungen erfolgen. Die ausgeleitete, feinteilige Suspension wird in einen Sammelbehälter oder direkt als Bestandteil in einen neuen Prozess überführt. Dieser Sammelbehälter kann beispielsweise auch ein Vorlagebehälter sein. Im Falle der kontinuierlichen Kreisfahrweise kann statt eines Sammelbehälters auch Rückleitung in eine Rotor-Stator- oder Rotor-Rotor-Maschine erfolgen.

Der mindestens eine Stoff dessen Schmelzpunkt oberhalb der Raumtemperatur liegt, stellt die disperse Phase dar.

In einer besonders bevorzugten Ausgestaltung des erfindungsgemäßen Verfahrens ist der mindestens eine Stoff, dessen Schmelztemperatur oberhalb der Raumtemperatur liegt, ausgewählt aus der Gruppe bestehend aus Wachsen, Fetten, Polymeren und Oligomeren.

Ein Oligomer ist ein Molekül, das aus mehreren strukturell gleichen oder ähnlichen Einheiten aufgebaut ist. Die genaue Anzahl der Einheiten ist offen, befindet sich jedoch meistens zwischen 10 und 30. Oft wird bei einem Oligomer auch von einer definierten Anzahl von Einheiten ausgegangen, während Polymere fast immer eine mehr oder weniger breite Molmassenverteilung aufweisen. Oligomere sind meist technische Vorstufen von Polymeren. Weiterhin können Stoffe enthaltend mindestens ein vernetzbares Polymer und einen Vernetzer eingesetzt werden, wobei die Schmelztemperatur des Vernetzers oberhalb der Schmelztemperatur des Polymers liegt.

Beispiele für Wachse sind Polymerwachse, PE-Wachse, langkettige Alkane, natürliche Wachse wie beispielsweise Bienen- oder Carnaubawachs.

Beispiele für Fette sind Triglyceride, Triacylglyceride, synthetische Fette.

Beispiele für Polymere sind thermoplastische Polymere. Besonders bevorzugt wird als Polymer mindestens ein thermoplastisches Polymer eingesetzt.

Unter thermoplastischen Polymeren versteht man Kunststoffe, die sich in einem bestimmten Temperaturbereich einfach (thermoplastisch) verformen lassen. Dieser Vorgang ist reversibel, das heißt er kann durch Abkühlung und Wiedererwärmung in den schmelzflüssigen Zustand beliebig oft wiederholt werden, solange nicht durch Überhitzung eine Zersetzung des Materials einsetzt.

Thermoplastische Polymere sind beispielsweise Polyolefine wie Polyisobuten, Polybutylen und Polyethylen, Polystyrol, Polyvinylchlorid, Polymethacrylat, Celluloseacetat, Celluloseacetobutyrat, sowie alle Copolymerisate von Polystyrol, Polyorganosiloxane, Polyamide und Polyester.

In einer bevorzugten Ausgestaltung der Erfindung handelt es sich um ein Verfahren, in dem das mindestens eine thermoplastische Polymer nicht auf Erdöl basiert.

Bei dem erfindungsgemäßen Verfahren können die in Schritt (a) und (c) verwendeten kontinuierlichen Phasen unabhängig voneinander ausgewählt sein aus der Gruppe bestehend aus Wasser, Diethylenglykol, Triethylenglykol, Polyethylenglykol, Propylenglykol, Polypropylenglykol, Polyetherole, Glycerin, organischen Carbonaten und Kohlensäureestern. Bevorzugt sind Wasser, Glycerin, Polyetherole und organische Carbonate. Insbesondere bevorzugt sind Wasser, Polyetherole und organische Carbonate.

Als organische Carbonate werden besonders bevorzugt Ethylencarbonat und Diethylencarbonat eingesetzt.

Darüber hinaus können in dem erfindungsgemäßen Verfahren auch Hilfsstoffe und/oder weitere Komponenten verwendet werden. Als Hilfsstoffe und/oder weitere Komponenten können in dem Verfahren auch Stabilisierungshilfsmittel aus der Gruppe der Emulgatoren, der Dispergierhilfsmittel, der Schutzkolloide und/oder der Rheologieadditive eingesetzt werden.

Die Verwendung von Emulgatoren sowie Emulgatoren selbst sind dem Fachmann allgemein bekannt.

Die Verwendung von Dispergierhilfsmitteln ist dem Fachmann allgemein bekannt.

Unter Schutzkolloiden versteht man Suspensionsmittel, die das Agglomerieren der Tröpfchen beim Übergang vom flüssigen in den festen Zustand verhindern. Beispiele für Schutzkolloide für die Verwendung in dem vorliegenden, erfindungsgemäßen Verfahren sind amphiphile Polymere sowie Stärke und Stärkederivate.

Als Rheologieadditive werden Stoffe bezeichnet, die das Fließverhalten der kontinuierlichen Phase beeinflussen. Als Rheologieadditive werden bevorzugt Verdicker verwendet.

Verdicker sind Substanzen, die die Viskosität eines Mediums erhöhen, es also zähflüssiger machen.

In einer weiteren Ausgestaltung der Erfindung wird während des Emulgierens bei hoher Temperatur (Schmelzemulgieren) in Schritt (b) die disperse Phase in feine Tröpfchen zerkleinert und homogen verteilt, wobei die feinen Tröpfchen eine mittlere Tropfengröße (die mittlere Verteilung der Größe der während des Verfahrens erzeugten Tropfen) aufweisen, die im Bereich zwischen 0,05 und 100 µm liegt. Besonders bevorzugt liegt die mittlere Tropfengröße im Bereich zwischen 0,05 und 10 µm, insbesondere zwischen 0,1 und 5 µm.

An das Verfahren schließt sich üblicherweise ein Ausleitungsschritt an. Dieser Ausleitungsschritt kann über gängige Ausleitungsvorrichtungen erfolgen. Die ausgeleitete, feinteilige Suspension wird in einen Sammelbehälter oder direkt als Bestandteil in einen neuen Prozess überführt. Dieser Sammelbehälter kann beispielsweise auch ein Vorlagebehälter sein. Im Falle der kontinuierlichen Kreisfahrweise kann statt eines Sammelbehälters auch Rückleitung in eine Rotor-Stator- oder Rotor-Rotor-Maschine erfolgen.

Die Rückleitung bewirkt eine engere Partikelgrößenverteilung sowie eine bessere Zerkleinerung der Voremulsion.

## Patentansprüche

1. Verfahren zur Herstellung feinteiliger Suspensionen durch Schmelzemulgieren, enthaltend mindestens einen Stoff mit einer Schmelztemperatur oberhalb der Raumtemperatur, umfassend folgende Schritte:
(a) Überleitung mindestens einer Voremulsion, enthaltend eine kontinuierliche und eine disperse Phase in eine Rotor-Stator-Maschine, eine Rotor-Rotor-Maschine oder zu einer kontinuierlichen und/oder dispersen Phase, wobei die Voremulsion den mindestens einen Stoff mit einer Schmelztemperatur oberhalb der Raumtemperatur enthält;
(b) Emulgieren der mindestens einen Voremulsion unter mechanischer Scherung und/oder Dehnung und/oder Turbulenz bei einer Temperatur die maximal 10 K über der Schmelztemperatur des mindestens einen Stoffs mit einer Schmelztemperatur oberhalb der Raumtemperatur liegt, beziehungsweise bei einer Temperatur die maximal 10 K unter und maximal 10 K über der Glasübergangstemperatur oder der Schmelztemperatur liegt, sofern der Stoff mit einer Schmelztemperatur oberhalb der Raumtemperatur ein Polymer ist, zur Herstellung einer feinteiligen Emulsion;
(c) Abkühlen der feinteiligen Emulsion zur Herstellung einer feinteiligen Suspension;
**dadurch gekennzeichnet, dass** der Dispersphasenanteil in Schritt (b) im Bereich von 85 % bis 99,5 % liegt und der Dispersphasenanteil der in Schritt (b) erhaltenen feinteiligen Emulsion im Bereich von 85 % bis 99,5 % liegt.

2. Verfahren gemäß Anspruch 1, **dadurch gekennzeichnet, dass** das Verfahren zusätzlich das Hinzufügen einer oder mehrerer weiterer Komponenten zu der mindestens einen Voremulsion in der Rotor-Stator-Maschine umfasst.

3. Verfahren gemäß Anspruch 1 oder 2 **dadurch gekennzeichnet, dass** die zuvor hergestellte, feinteilige Emulsion in Schritt (c) durch Zugabe einer weiteren, auf unterhalb der Schmelz- oder Glasübergangstemperatur des bei Raumtemperatur festen Stoffs temperierten, kontinuierlichen Phase verdünnt wird.

4. Verfahren gemäß Anspruch 3, **dadurch gekennzeichnet, dass** das Abkühlen und Verdünnen in Verfahrensschritt (c) gleichzeitig erfolgt.

5. Verfahren gemäß Anspruch 4, **dadurch gekennzeichnet, dass** das gleichzeitige Abkühlen und das Verdünnen in Schritt (c) auf eine Endkonzentration an Dispersphasenanteil von 1 bis 70 Gew.-% erfolgt.

6. Verfahren gemäß einem der Ansprüche 3 bis 5, **dadurch gekennzeichnet, dass** die in Schritt (d) verwendeten kontinuierlichen Phasen unabhängig voneinander ausgewählt sind aus der Gruppe bestehend aus Wasser, Diethylenglykol, Triethylenglykol, Polyethylenglykol, Propylenglykol, Polypropylenglycol, Polyetherole, Glycerin, organischen Carbonaten und Kohlensäureestern.

7. Verfahren gemäß einem der Ansprüche 1 bis 6, **dadurch gekennzeichnet, dass** der mindestens eine Stoff, dessen Schmelztemperatur oberhalb der Raumtemperatur liegt, ausgewählt ist aus der Gruppe bestehend aus Wachsen, Fetten, Polymeren und Oligomeren.

8. Verfahren gemäß Anspruch 7, **dadurch gekennzeichnet, dass** als Polymer mindestens ein thermoplastisches Polymer eingesetzt wird.

9. Verfahren gemäß Anspruch 8, **dadurch gekennzeichnet, dass** das mindestens eine thermoplastische Polymer nicht auf Erdöl basiert.

10. Verfahren gemäß einem der Ansprüche 1 bis 9, **dadurch gekennzeichnet, dass** als weiteren Komponenten Stabilisierungshilfsmittel aus der Gruppe der Emulgatoren und/oder Dispergierhilfsmittel und/oder Schutzkolloide und/oder Rheologieadditive eingesetzt werden.

11. Verfahren gemäß Anspruch 10, **dadurch gekennzeichnet, dass** die Rheologieadditive Verdicker sind.

12. Verfahren gemäß einem der Ansprüche 1 bis 11, **dadurch gekennzeichnet, dass** während des Emulgierens in Schritt (b) die disperse Phase in feine Tröpfchen zerkleinert und homogen verteilt wird, wobei die feinen Tröpfchen eine mittlere Tropfengröße aufweisen, die im Bereich zwischen 0,05 und 100 µm liegt.

13. Verfahren gemäß einem der Ansprüche 1 bis 12, **dadurch gekennzeichnet, dass** die Überleitung einer oder mehrerer grober Vordispersionen und/oder grober Voremulsionen direkt vor der Einleitung in die Rotor-Stator-Maschine in Schritt (a) über ein T-Stück oder einen Injektor erfolgt und die groben Vordispersionen und/oder groben Voremulsionen dabei optional unterschiedlich vortemperiert sind.

## Claims

1. A process for the preparation of finely divided suspensions by melt emulsification, comprising at least one substance with a melting temperature above room temperature, comprising the following steps:
(a) passing at least one preemulsion, comprising one continuous phase and one disperse phase, to a rotor-stator machine, a rotor-rotor machine or to a continuous and/or disperse phase, the preemulsion comprising the at least one substance with a melting temperature above room temperature;
(b) emulsifying the at least one preemulsion with mechanical shear and/or elongation and/or turbulence at a temperature which is at most 10 K above the melting temperature of the at least one substance with a melting temperature above room temperature, or at a temperature which is at most 10 K below and at most 10 K above the glass transition temperature or the melting temperature, if the substance with a melting temperature above room temperature is a polymer, for producing a finely divided emulsion;
(c) cooling the finely divided emulsion to produce a finely divided suspension;
wherein the disperse phase fraction in step (b) is in the range from 85% to 99.5% and the disperse phase fraction of the finely divided emulsion obtained in step (b) is in the range from 85% to 99.5%.

2. The process according to claim 1, which additionally comprises adding one or more further components to the at least one preemulsion in the rotor-stator machine.

3. The process according to claim 1 or 2, wherein the finely divided emulsion produced above is diluted in step (c) by adding a further continuous phase heated to below the melting temperature or glass transition temperature of the substance that is solid at room temperature.

4. The process according to claim 3, wherein the cooling and dilution takes place simultaneously in process step (c).

5. The process according to claim 4, wherein the simultaneous cooling and dilution takes place in step (c) to an end concentration of disperse phase fraction of 1 to 70% by weight.

6. The process according to any one of claims 3 to 5, wherein the continuous phases used in step (d) are selected, independently of one another, from the group consisting of water, diethylene glycol, triethylene glycol, polyethylene glycol, propylene glycol, polypropylene glycol, polyetherols, glycerol, organic carbonates and carbonic acid esters.

7. The process according to any one of claims 1 to 6, wherein the at least one substance whose melting temperature is above room temperature is selected from the group consisting of waxes, fats, polymers and oligomers.

8. The process according to claim 7, wherein at least one thermoplastic polymer is used as polymer.

9. The process according to claim 8, wherein the at least one thermoplastic polymer is not based on petroleum.

10. The process according to any one of claims 1 to 9, wherein further components used are stabilization auxiliaries from the group of emulsifiers and/or dispersion auxiliaries and/or protective colloids and/or rheology additives.

11. The process according to claim 10, wherein the rheology additives are thickeners.

12. The process according to any one of claims 1 to 11, wherein during the emulsification in step (b), the disperse phase is comminuted into fine droplets and homogeneously dispersed, the fine droplets having an average drop size which is in the range between 0.05 and 100 µm.

13. The process according to any one of claims 1 to 12, wherein the passing of one or more coarse predispersions and/or coarse preemulsions takes place directly prior to introduction into the rotor-stator machine in step (a) via a T-piece or an injector and the coarse predispersions and/or coarse preemulsions are thereby optionally differently preheated.

## Revendications

1. Procédé pour la préparation de suspensions finement divisées par émulsion en masse fondue, contenant au moins une substance présentant une température de fusion supérieure à la température ambiante, comprenant les étapes suivantes :
(a) passage d'au moins une préémulsion, contenant une phase continue et une phase dispersée, dans une machine à rotor-stator, une machine à rotor-rotor ou dans une phase continue et/ou dispersée, la préémulsion contenant ladite au moins une substance présentant une température de fusion supérieure à la température ambiante ;
(b) émulsion de ladite au moins une préémulsion sous cisaillement mécanique et/ou expansion et/ou turbulence à une température qui est située au maximum 10 K au-dessus de la température de fusion de ladite au moins une substance présentant une température de fusion supérieure à la température ambiante, ou, selon le cas, à une température qui est située au maximum 10 K au-dessous et au maximum 10 K au-dessus de la température de transition vitreuse ou de la température de fusion, pour autant que la substance présentant une température de fusion supérieure à la température ambiante soit un polymère, pour la préparation d'une émulsion finement divisée ;
(c) refroidissement de l'émulsion finement divisée pour la préparation d'une suspension finement divisée ;
**caractérisé en ce que** la proportion de phase dispersée dans l'étape (b) se situe dans la plage de 85% à 99,5% et la proportion de phase dispersée de l'émulsion finement divisée obtenue dans l'étape (b) se situe dans la plage de 85% à 99,5%.

2. Procédé selon la revendication 1, **caractérisé en ce que** le procédé comprend en outre l'addition d'un ou de plusieurs autres composants à ladite au moins une préémulsion dans la machine à rotor-stator.

3. Procédé selon la revendication 1 ou 2, **caractérisé en ce que** l'émulsion finement divisée préparée au préalable est diluée dans l'étape (c) par addition d'une autre phase continue équilibrée thermiquement au-dessous de la température de fusion ou de transition vitreuse de la substance solide à température ambiante.

4. Procédé selon la revendication 3, **caractérisé en ce que** le refroidissement et la dilution dans l'étape de procédé (c) ont lieu simultanément.

5. Procédé selon la revendication 4, **caractérisé en ce que** le refroidissement et la dilution simultanés dans l'étape (c) ont lieu à une concentration finale en proportion de phase dispersée de 1 à 70% en poids.

6. Procédé selon l'une quelconque des revendications 3 à 5, **caractérisé en ce que** les phases continues utilisées dans l'étape (d) sont choisies indépendamment les unes des autres dans le groupe constitué par l'eau, le diéthylèneglycol, le triéthylèneglycol, le polyéthylèneglycol, le propylèneglycol, le polypropylèneglycol, les polyétherols, le glycérol, les carbonates organiques et les esters de l'acide carbonique.

7. Procédé selon l'une quelconque des revendications 1 à 6, **caractérisé en ce que** ladite au moins une substance, dont la température de fusion est supérieure à la température ambiante, est choisie dans le groupe constitué par les cires, les graisses, les polymères et les oligomères.

8. Procédé selon la revendication 7, **caractérisé en ce qu'**on utilise, comme polymère, au moins un polymère thermoplastique.

9. Procédé selon la revendication 8, **caractérisé en ce que** ledit au moins un polymère thermoplastique n'est pas à base de pétrole.

10. Procédé selon l'une quelconque des revendications 1 à 9, **caractérisé en ce qu'**on utilise, comme autres composants, des adjuvants de stabilisation du groupe formé par les émulsifiants et/ou des adjuvants de dispersion et/ou des colloïdes de protection et/ou des additifs de rhéologie.

11. Procédé selon la revendication 10, **caractérisé en ce que** les additifs de rhéologie sont des épaississants.

12. Procédé selon l'une quelconque des revendications 1 à 11, **caractérisé en ce que**, pendant l'émulsion dans la phase (b), la phase dispersée est réduite en fines gouttelettes et répartie de manière homogène, les fines gouttelettes présentant une grosseur moyenne de goutte située dans la plage entre 0,05 et 100 µm.

13. Procédé selon l'une quelconque des revendications 1 à 12, **caractérisé en ce que** le passage d'une ou de plusieurs prédispersions grossières et/ou préémulsions grossières a lieu directement avant l'introduction dans la machine à rotor-stator dans l'étape (a) via une pièce en T ou un injecteur et les prédispersions grossières et/ou les préémulsions grossières sont éventuellement thermiquement prééquilibrées de manière différente.
